# EUROPÄISCHE PATENTSCHRIFT

(11) **EP 2 309 037 B1**
(45) Veröffentlichungstag und Bekanntmachung des Hinweises auf die Patenterteilung: **12.12.2012**
(21) Anmeldenummer: 09012803.4
(22) Anmeldetag: 09.10.2009
(51) Int. Cl.: B24C 1/08, C23C 2/00, C23C 2/02, C22C 18/04, B32B 15/01, B24C 1/06, C25D 5/12

(54) **Bauteil mit einem Bauteilkern und Verfahren zur Herstellung des Bauteils**
Component with a component core and method for manufacturing the component
Composant doté d'un noyau et procédé de fabrication du composant

(43) Veröffentlichungstag der Anmeldung: 13.04.2011
(73) Patentinhaber: HDO -Druckguss- und Oberflächentechnik GmbH, 33106 Paderborn (DE)
(72) Erfinder: Bieniek, Peter, 33098 Paderborn (DE); Gündüz, Sermuhal, 33154 Salzkotten (DE); Herberhold, Heinz, Dr., 59555 Lippstadt (DE); Meier, Uwe, 33189 Schlangen (DE)
(74) Vertreter: Ostermann, Thomas

(56) Entgegenhaltungen:
- EP-A1- 2 030 777
- WO-A1-2008/032872
- WO-A2-2004/067804
- DE-A1-102005 054 463
- GB-A- 1 290 986
- US-A- 4 343 921

## Beschreibung

Die Erfindung betrifft ein Verfahren nach dem Oberbegriff des Patentanspruchs 1.

Ferner betrifft die Erfindung ein Bauteil nach dem Oberbegriff des Patentanspruchs 6.

Aus der EP 2 030 777 A1 ist ein Bauteil mit einem Bauteilkern aus einem Stahllaminat bekannt, welcher mit Zink und anschließend mit einem Gummi mittels Galvanisieren beschichtet wird. Die Zinkschicht wird sandbestrahlt, bevor das Gummi auf die sandbestrahlte Zinnschicht aufgebracht wird.

Die US 4 343 921 A offenbart ein Bauteil mit einem Bauteilkern aus einem verchromten bzw. verzinkten Stahlsubstrat, welches mit einem Polymer mittels Galvanisieren beschichtet wird. Die Chrom- bzw. Zinkschicht wird vor dem Aufbringen des Polymers sandbestrahlt.

Aus der WO 2008 032872 A1 ist bekannt, ein als Bauteilkern dienendes Stahlrohr mit Nickel, anschließend mit Zinn und in einem weiteren Verfahrensschritt mit einem Schmiermittel mittels Galvanisieren zu beschichten. Die Zinkschicht wird vor dem Aufbringen des Schmiermittels sandbestrahlt.

Aus der DE 10 2005 054463 A1 ist bekannt, auf einen Bauteilkern eine Kupfer-, Nickel-, Kupfernickellegierung- oder Chromschicht aufzubringen und eine weitere Schicht aus einer Ni-Cr-Ru-Legierung aufzubringen. Vor dem Aufbringen der Ni-Cr-Ru-Legierung wird das Halbzeug sandbestrahlt.

Aus der GB 1 290 986 A ist bekannt, einen als Bauteilkern dienenden Kolben aus Stahl mit einer Zwischenschicht aus einer Legierung mit mindestens 20 % Metallcarbid und einer äußeren Schicht aus Nickel, Kobalt oder Wolfram zu versehen. Die Zwischenschicht wird sandbestrahlt, bevor die äußere Schicht mittels Flammspritzen aufgebracht wird.

Aus der WO 2004 067804 A2 ist ein Sanitärgegenstand, auf den eine weich ausgebildete Zwischenschicht aufgebracht wird. Die weiche Beschichtung des so geschaffenen Halbzeugs wird in einem weiteren Verfahrensschritt sandgestrahlt bzw. gebürstet und dann mit einer Ni-W- bzw. PD-Ni-Legierung beschichtet. Der Sanitärgegenstand selbst besteht aus Aluminium- oder Zinkdruckguss bzw. aus Kunststoff.

Zur Herstellung eines Bauteils mit einer mattverchromten Oberfläche ist es allgemein bekannt, einen beispielsweise mittels Zinkdruckgießens hergestellten Bauteilkern vor dem Aufbringen einer Deckbeschichtung sandzustrahlen. Die Deckbeschichtung weist hierbei beispielsweise drei Schichten auf, wobei eine direkt auf dem Bauteilkern aufgebrachte erste Schicht der Deckbeschichtung als eine Kupferschicht, eine auf der ersten Schicht aufgebrachte zweite Schicht der Deckbeschichtung als eine Nickelschicht und eine auf der zweiten Schicht aufgebrachte äußere Schicht der Deckbeschichtung als eine Chromschicht ausgebildet ist. Die Schichten können hierbei durch Galvanisieren und/oder durch Bedampfen aufgebracht werden. Infolge der Sandbestrahlung des Bauteilkerns erhält das fertige Bauteil mit der äußeren Chromschicht ein mattes Erscheinungsbild. Beispielsweise werden als Bauteile Armaturen für Bad und Küche, Bedienelemente eines Automobils wie Türgriffe und andere Dekorartikel nach diesem Verfahren hergestellt. Nachteilig ist jedoch, dass sich infolge des Sandstrahlens des Bauteilkerns Fehlstellen, zum Beispiel Blasen, Pickel oder Risse, auf der mattverchromten Oberfläche des Bauteils bilden. Derartige Fehlstellen beeinträchtigen das optische Erscheinungsbild des Bauteils mithin so stark, dass das Bauteil nicht oder nur nach aufwändiger Nachbearbeitung verbaut werden kann.

Aufgabe der Erfindung ist es daher, ein Verfahren zur Herstellung des Bauteils und ein mit dem Verfahren hergestelltes Bauteil anzugeben, so dass das Auftreten von Fehlstellen auf einer Oberfläche des Bauteils vermieden wird.

Zur Lösung dieser Aufgabe weist die Erfindung die Merkmale des Patentanspruchs 1 auf.

Der besondere Vorteil der Erfindung besteht darin, dass durch das Vorsehen der Panzerbeschichtung die mechanische Belastung des Bauteilkerns reduziert und ein Aufreißen bzw. Beschädigen oberflächennaher Poren und sonstiger Einschlüsse in dem Bauteilkern verhindert werden. Dies hat zur Folge, dass die Oberflächengüte sowohl des Halbzeugs als auch des fertigen Bauteils verbessert und das Auftreten von Fehlstellen vermieden werden. Der Bauteilkern wird bevorzugt mittels Zinkdruckguss, Aluminiumdruckguss oder Magnesiumdruckguss bzw. mittels Kunststoffspritzgießens hergestellt. Er besteht daher aus einem nicht homogenen Basismaterial, welches insbesondere beim Zinkdruckguss, beim Aluminiumdruckguss und beim Magnesiumdruckguss überdies porös ist. Vor dem Sandstrahlen ein Bauteilkern mit einer Panzerbeschichtung versehen wird. Bauteilkern und Panzerbeschichtung bilden ein Halbzeug, welches anschließend in üblicher Weise sandgestrahlt wird, um Verunreinigungen und/oder Grat zu entfernen bzw. eine Oberfläche des Halbzeugs aufzurauen. Sandstrahlen umfasst im Sprachgebrauch dieser Erfindung das Aufblasen eines beliebigen Strahlmittels auf die Oberfläche des Halbzeugs. Als Strahlmittel können alle in der Industrie üblichen Strahlmittel, beispielsweise Sand, Hochofenschlacke, Glasgranulat, Korund, Stahl, Kunststoffgranulat, Nussschalen, Soda, Eiskristalle oder CO₂-Schnee-Pallets eingesetzt werden. Aufgrund der Panzerbeschichtung wird die mechanische Belastung des Bauteils beim Sandstrahlen so weit reduziert, dass das Bilden von Fehlstellen ausbleibt.

Die Panzerbeschichtung weist hierbei zwei separate Schichten auf, wobei eine erste Schicht beispielsweise derart hart bzw. stabil ausgebildet ist, dass der Bauteilkern vor den mechanischen Belastungen beim Sandstrahlen geschützt ist. Die sandbestrahlbare Schicht wird auf die harte Panzerschicht aufgebracht, um sicherzustellen, dass das so erzeugte Halbzeug in gewohnter Weise mittels Sandstrahlens weiter verarbeitet, das heißt insbesondere aufgeraut werden kann. Die Panzerschicht und die sandbestrahlbare Schicht können vorzugsweise aus einem unterschiedlichen Werkstoff gebildet werden. Die harte Panzerschicht kann beispielsweise aus Nickel, Kobalt oder einer Nickel-Eisen-Legierung gebildet sein. Die sandbestrahlbare Schicht kann beispielsweise weich im Vergleich zur harten Panzerschicht ausgebildet sein. Als Werkstoff kann beispielsweise Kupfer verwendet werden.

Durch das Aufbringen einer äußeren Chromschicht auf das sandgestrahlte Halbzeug erhält das Bauteil die gewünschte mattverchromte Oberfläche und das geforderte Aussehen.

Nach einer Weiterbildung der Erfindung wird vor dem Aufbringen der Panzerschicht eine Unterschicht als eine weitere Schicht der Panzerbeschichtung auf den Bauteilkern aufgebracht. Durch das Vorsehen einer Unterschicht zwischen der Panzerschicht und dem Bauteilkern wird die Prozesssicherheit erhöht und das Anhaften bzw. die Widerstandsfähigkeit der Panzerschicht verbessert. Die Unterschicht kann beispielsweise durch Galvanisieren oder Bedampfen auf den Bauteilkern aufgebracht werden. Der für die Unterschicht verwendete Werkstoff kann so gewählt werden, dass die Panzerschicht in einem weiteren Verfahrensschritt durch Galvanisieren aufbringbar ist. Beispielsweise kann die Unterschicht hierzu als Kupferschicht ausgebildet sein.

Zur Lösung der Aufgabe weist die Erfindung die Merkmale des Patentanspruchs 6 auf.

Der besondere Vorteil der Erfindung besteht darin, dass durch das Vorsehen einer Panzerbeschichtung zwischen der Deckschicht und dem Bauteilkern letzterer beim Sandstrahlen mechanisch weniger stark belastet wird, so dass in einem Basismaterial des Bauteilkerns eingeschlossene Poren nicht beschädigt, zum Beispiel aufgerissen werden und infolgedessen Fehlstellen auf einer Oberfläche des Bauteils vermieden werden können. Die Panzerbeschichtung kann durch Galvanisieren und/oder Bedampfen auf den Bauteilkern aufgebracht werden, wodurch sich eine gleichmäßige Dicke der Panzerbeschichtung realisieren lässt. Indem die Panzerbeschichtung sandbestrahlbar ist, kann sichergestellt werden, dass das Bauteil die geforderte Haptik und die gewünschte mattchrome Oberfläche aufweist.

Der Bauteilkern kann aufgrund des Herstellverfahrens besonders präzise, in großer Stückzahl und wirtschaftlich gefertigt werden. Das Vorsehen einer Panzerbeschichtung kann hierdurch in den heute üblichen Herstellungsprozess integriert werden, so dass vorhandene Maschinen und Anlagen weiter verwendet werden können. Insbesondere können die heute ohnehin vorhandenen Werkzeuge, insbesondere die Formen für das Spritzgießen bzw. den Druckguss, weiter verwendet werden.

Nach einer bevorzugten Ausführungsform der Erfindung weist die Panzerbeschichtung eine harte Panzerschicht zum Schutz des Bauteilkerns vor mechanischen Belastungen beim Sandstrahlen und eine an die Deckbeschichtung angrenzende, sandbestrahlbare Schicht auf. Vorteilhaft wird durch das Ausbilden einer Panzerschicht und einer sandbestrahlbaren Schicht eine Trennung der Funktionen der Panzerbeschichtung erreicht. Die Panzerschicht gibt der Panzerbeschichtung die erforderliche Härte, um den unterhalb der Panzerbeschichtung liegenden Bauteilkern vor mechanischen Belastungen beim Sandstrahlen zu schützen. Die sandbestrahlbare Schicht ist beispielsweise derart weich bzw. nachgiebig ausgebildet, dass das aus dem Bauteilkern und der Panzerbeschichtung gebildet Halbzeug in gewohnter Weise sandstrahlbar ist. Die unterschiedlichen Funktionen der Panzerbeschichtung können bei Verwendung von zwei separaten Funktionsschichten in einfacher Weise miteinander verknüft wird. Demgegenüber muss für die Kombination dieser Funktionen in einer gemeinsamen Schicht ein Werkstoff gewählt werden, der sowohl eine gewisse Härte zum Schutz des Bauteilkerns beim Sandstrahlen als auch eine gewisse Nachgiebigkeit zur Sicherstellung der Sandbestrahlbarkeit aufweisen muss.

Nach einer Weiterbildung der Erfindung ist zwischen der Panzerschicht und dem Bauteilkern eine Unterschicht als eine weitere Schicht der Panzerbeschichtung ausgebildet. Die Unterschicht ist mittels Galvanisieren und/oder Bedampfen auf den Bauteilkern aufbringbar. Durch das Vorsehen einer zusätzlichen Unterschicht kann die Anhaftung der Panzerschicht verbessert werden. Darüber hinaus kann beim Aufbringen der Panzerschicht mittel Galvanisieren durch die Wahl eines geeigneten Werkstoffs für die Unterschicht nahezu jedes beliebige, galvanisierbare Material als Panzerschicht aufgetragen werden. Beispielsweise kann die Panzerschicht aufgalvanisiert werden, nachdem auf einen mittels Kunststoffspritzgießens hergestellten Bauteilkern eine Unterschicht aus Kupfer aufgedampft wird.

Nach einer Weiterbildung der Erfindung weist die Panzerschicht eine größere Härte auf als die sandbestrahlbare Schicht und/oder die Unterschicht und/oder das Basismaterial. Vorteilhaft werden die unterhalb der Panzerschicht angeordneten Schichten der Panzerbeschichtung sowie der Bauteilkern hierdurch vor den mechanischen Belastungen beim Sandstrahlen geschützt. Darüber hinaus ist sichergestellt, dass die sandbestrahlbare Schicht zur Erzeugung der matten, aufgerauten Oberfläche mechanisch mittels Sandstrahlens bearbeitet werden kann.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: ein Bauteil mit einer Panzerbeschichtung und einer Deckbeschichtung und
- Figuren 2a bis 2f: Herstellungsschritte zur Herstellung des Bau- teils gemäß Figur 1.

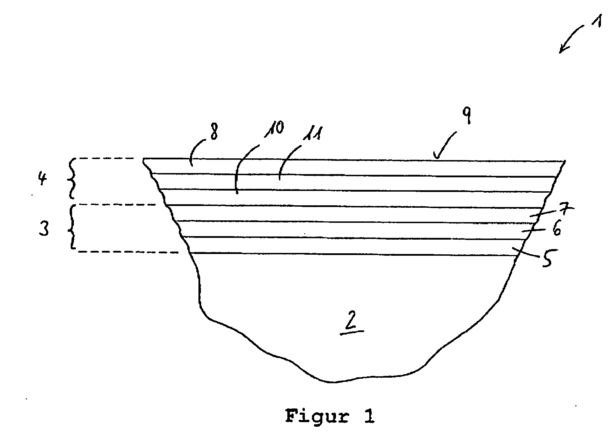

Ein Bauteil 1 gemäß Figur 1 besteht im Wesentlichen aus einem Bauteilkern 2, einer auf dem Bauteilkern 2 aufgebrachten Panzerbeschichtung 3 und einer auf die Panzerbeschichtung 3 aufgebrachten Deckbeschichtung 4.

Der Bauteilkern 2 ist mittels Zinkdruckgießens herstellbar. Er weist eine Zinklegierung als ein Basismaterial auf, wobei dem Zink ca. 4 % Aluminium und ca. 1 % Kupfer beigegeben sind (ZnAl4Cu1).

Die Panzerbeschichtung 3 weist insgesamt drei Schichten auf, wobei eine unmittelbar auf den Bauteilkern 2 aufgebrachte erste Schicht als eine Unterschicht 5, eine auf die Unterschicht 5 aufgebrachte zweite Schicht als eine Panzerschicht 6 und eine auf die Panzerschicht 6 aufgebrachte dritte Schicht als eine sandbestrahlbare Schicht 7 ausgebildet sind. Die Unterschicht 5 besteht ebenso wie die sandbestrahlbare Schicht 7 aus Kupfer bzw. einer Kupferlegierung. Die Panzerschicht 6 ist als eine Nickelschicht ausgebildet. Die Panzerschicht 6 (Nickelschicht) weist damit eine größere Härte auf als die Unterschicht 5 (Kupferschicht), als die sandbestrahlbare Schicht 7 (Kupferschicht) und als der Bauteilkern 2.

Die auf der Panzerbeschichtung 3 aufgebrachte Deckbeschichtung 4 weist ebenfalls drei Schichten auf. Eine äußere Schicht 8 ist als eine Chromschicht ausgebildet und definiert eine Oberfläche 9 des Bauteils 1. Zwischen der äußeren Schicht 8 und der Panzerbeschichtung 3 sind zwei Zwischenschichten 10, 11 angeordnet, wobei eine erste, der Panzerbeschichtung 3 zugewandte Zwischenschicht 10 als eine Kupferschicht und eine zwischen der ersten Zwischenschicht 10 und der äußeren Schicht 8 angeordnete zweite Zwischenschicht 11 als eine Nickelschicht ausgebildet sind.

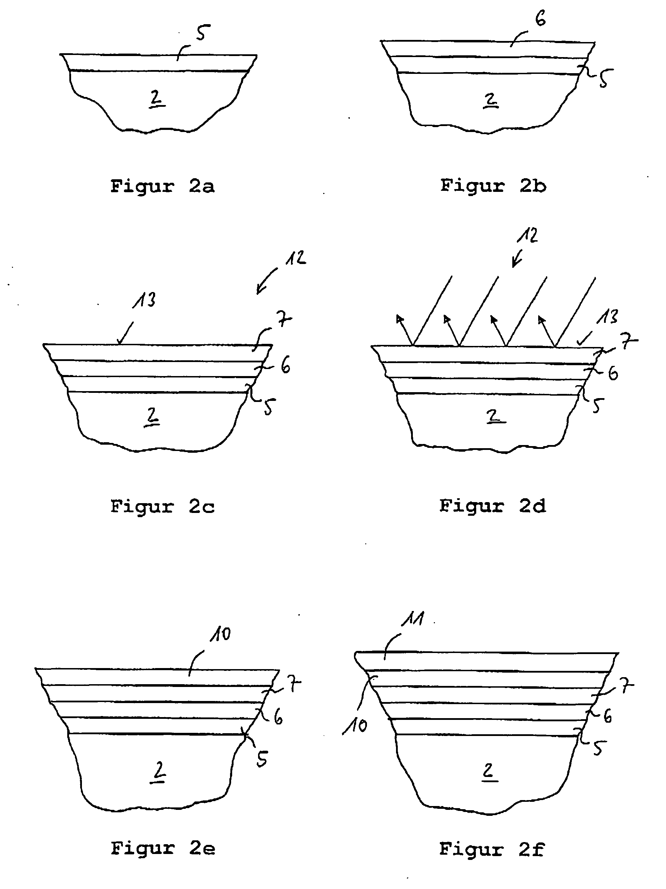

Zur Herstellung des Bauteils 1 wird wie folgt verfahren. Zunächst wird gemäß Figur 2a die Unterschicht 5 durch Galvanisieren auf dem Bauteilkern 2 aufgebracht. Danach wird gemäß Figur 2b die Panzerschicht 6 durch Galvanisieren auf die Unterschicht 5 aufgebracht. In einem weiteren Schritt wird die sandbestrahlbare Schicht 7 gemäß Figur 2c durch Galvanisieren auf die Panzerschicht 6 aufgebracht. Die untere Schicht 5 bildet mit der Panzerschicht 6 und der sandbestrahlbaren Schicht 7 die Panzerbeschichtung 3. Die Panzerbeschichtung 3 bildet zusammen mit dem Bauteilkern 2 ein Halbzeug 12.

Eine Oberfläche 13 des Halbzeugs 12 wird in einem weiteren Verfahrensschritt gemäß Figur 2d sandgestrahlt. Die Oberfläche 13 des Halbzeugs 12 wird hierbei aufgeraut und erscheint matt. Die beim Sandstrahlen wirkenden mechanischen Belastungen werden durch das Vorsehen der Panzerschicht 6 von dem darunter liegen Bauteilkern 2 zumindest teilweise ferngehalten, so dass das nichthomogene, poröse Basismaterial des Bauteilkerns 2 beim Sandstrahlen nicht beschädigt wird. Poren und sonstige Einschlüsse im Basismaterial bleiben hierdurch erhalten bzw. von den Poren ausgehende Risse und sonstige Schädigungen dringen nicht durch die Panzerschicht 6 an die Oberfläche 13 des Halbzeugs 12. Die Oberfläche 13 des Halbzeugs 12 ist demzufolge frei von Fehlstellen.

Nach dem Sandstrahlen wird zum Aufbringen der Deckbeschichtung 4 gemäß Figur 2e zunächst die erste Zwischenschicht 10 auf die sandbestrahlbare Schicht 7 und in einem weiteren Schritt gemäß Figur 2f die zweite Zwischenschicht 11 auf die erste Zwischenschicht 10 aufgebracht. Die Zwischenschichten 10, 11 werden hierbei durch Galvanisieren aufgetragen. Zur Herstellung des fertigen Bauteils 1 gemäß Figur 1 wird auf die zweite Zwischenschicht 11 durch Galvanisieren die äußere Chromschicht 8 aufgetragen, die dem Bauteil in Verbindung mit der matten, aufgerauten Oberfläche 13 des Halbzeugs 12 das mattverchromte Aussehen und die gewünschte Haptik verleiht.

Nach einer alternativen Ausführungsform der Erfindung kann der Bauteilkern 2 statt der Zinklegierung Zink als Basismaterial aufweisen. Ebenso kann der Bauteilkern 2 durch Druckgießen als ein Aluminiumdruckgusskörper mit Aluminium oder einer Aluminiumlegierung als Basismaterial und/oder als ein Magnesiumdruckgusskörper mit Magnesium oder einer Magnesiumlegierung als Basismaterial herstellbar sein. Ferner kann der Bauteilkern 2 durch Spritzgießen als ein Kunststoffkörper mit einem Kunststoff als Basismaterial hergestellt sein.

Gleiche Bauteile und Bauteilfunktionen der Ausführungsbeispiele sind mit den gleichen Bezugsziffern versehen.

Nach einer alternativen Ausführungsform der Erfindung können die Schichten 5, 6, 7, 8, 10, 11 der Panzerbeschichtung 3 und der Deckbeschichtung 4 aufgedampft werden. Ebenso ist es möglich, dass einzelne Schichten 5, 6, 7, 8, 10, 11 aufgedampft und andere Schichten 5, 6, 7, 8, 10, 11 mittels Galvanisieren aufgetragen werden. Alternativ kann mindestens die eine Schicht 8, 10, 11 der Deckbeschichtung 4 auch durch Lackieren oder mittels anderer Aufbringungsarten aufgetragen werden. Als Werkstoff der Panzerschicht 6 kann statt Nickel jeder andere hinreichend harte Werkstoff, beispielsweise Kobalt oder eine Nickel-Eisen-Legierung verwendet werden. Ebenso ist es möglich, die sandbestrahlbare Schicht 7 und/oder die Unterschicht 5 aus einem anderen Werkstoff als Kupfer bzw. einer Kupferlegierung herzustellen. Ebenso kann auf das Vorsehen der Unterschicht 5 verzichtet werden, wobei die Panzerbeschichtung 3 in diesem Fall aus der Panzerschicht 6 und der sandbestrahlbaren Schicht 7 oder aus lediglich einer einzigen Schicht bestehen kann, welche sowohl sandbestrahlbar ist als auch den Bauteilkern 2 hinreichend vor den mechanischen Belastungen beim Sandstrahlen schützt.

Die Deckbeschichtung 4 kann nach einer alternativen Ausführungsform der Erfindung als einzige Schicht die äußere Schicht 8 aufweisen. Ebenso können die Anzahl an Zwischenschichten 10,11 und der Werkstoff der Zwischenschichten 10, 11 variieren. Beispielsweise kann lediglich eine einzige Zwischenschicht 10, 11 angeordnet sein. Die einzige Zwischenschicht 10, 11 kann als eine Nickelschicht oder als eine Schicht aus einem anderen Werkstoff ausgebildet sein, wobei der Werkstoff derart gewählt ist, dass das Bauteil 1 die gewünschte Erscheinung erhält und das Aufbringen der äußeren Schicht 8 sicher und zuverlässig erfolgen kann.

Nach einer alternativen Ausführungsform der Erfindung können weitere Schichten zwischen dem Bauteilkern 2 und der Panzerbeschichtung 3 und zwischen der Panzerbeschichtung 3 und der Deckbeschichtung 4 angeordnet sein. Die weiteren Schichten können durch Bedampfen oder Galvanisieren aufgebracht werden. Ebenso ist es möglich, Schichten als Lackschichten auszubilden.

## Patentansprüche

1. Verfahren zur Herstellung eines Bauteils (1) mit einem Bauteilkern (2) aus einem Basismaterial,
- wobei der Bauteilkern (2) mittels Druckgießens als ein Aluminiumdruckgusskörper mit Aluminium oder einer Aluminiumlegierung als Basismaterial und/oder als ein Zinkdruckgusskörper mit Zink oder einer Zinklegierung als Basismaterial und/oder als ein Magnesiumdruckgusskörper mit Magnesium oder einer Magnesiumlegierung als Basismaterial oder mittels Spritzgießens als ein Kunststoffkörper mit einem Kunststoff als Basismaterial hergestellt wird und
- wobei ein Halbzeug (12) enthaltend den Bauteilkern (2) sandgestrahlt und dann mit einer Deckbeschichtung (4) versehen wird,
wobei zur Bildung des Halbzeugs (12) vor dem Sandstrahlen eine Panzerbeschichtung (3) auf den Bauteilkern (2) aufgebracht wird,**dadurch gekennzeichnet, dass** zur Bildung der Panzerbeschichtung (3) zunächst mittels Galvanisieren und/oder Bedampfen eine harte Panzerschicht (6) zum Schutz des Bauteilkerns (2) vor mechanischen Belastungen beim Sandstrahlen und dann mittels Galvanisieren eine sandbestrahlbare Schicht (7) auf die Panzerschicht (6) aufgebracht werden, und dass als eine äußere Schicht (8) der Deckbeschichtung (4) eine Chromschicht mittels Galvanisieren aufgebracht wird.

2. Verfahren nach Anspruch 1, **dadurch gekennzeichnet, dass** vor dem Aufbringen der äußeren Schicht (8) wenigstens eine weitere Schicht (10, 11) der Deckbeschichtung (4) auf die Panzerbeschichtung (3) aufgebracht wird zur Bildung wenigstens einer zwischen der Panzerbeschichtung (3) und der äußeren Schicht (8) angeordneten Zwischenschicht (10, 11).

3. Verfahren nach Anspruch 2, **dadurch gekennzeichnet, dass** als Zwischenschicht (10, 11) eine Kupferschicht und/oder eine Nickelschicht mittels Galvanisieren und/oder Bedampfen aufgebracht werden.

4. Verfahren nach einem der Ansprüche 1 bis 3, **dadurch gekennzeichnet, dass** vor dem Aufbringen der Panzerschicht (6) eine Unterschicht (5) als eine weitere Schicht der Panzerbeschichtung (3) auf den Bauteilkern (2) aufgebracht wird.

5. Verfahren nach Anspruch 4, **dadurch gekennzeichnet, dass** zur Bildung der Unterschicht (5) zwischen dem Bauteilkern (2) und der Panzerschicht (6) eine Kupferschicht (2) mittels Galvanisieren und/oder Bedampfen auf den Bauteilkern aufgebracht wird.

6. Bauteil (1) mit einem Bauteilkern (2) aus einem Basismaterial und mit einer mittels Galvanisieren aufbringbaren Deckbeschichtung (4) zur Bildung einer mattverchromten Oberfläche (9), wobei der Bauteilkern (2) mittels Druckgießens als ein Aluminiumdruckgusskörper mit Aluminium oder einer Aluminiumlegierung als Basismaterial und/oder als ein Zinkdruckgusskörper mit Zink oder einer Zinklegierung als Basismaterial und/oder als ein Magnesiumdruckgusskörper mit Magnesium oder einer Magnesiumlegierung als Basismaterial oder mittels Spritzgießens als ein Kunststoffkörper mit einem Kunststoff als Basismaterial herstellbar ist, **dadurch gekennzeichnet, dass** zwischen dem Bauteilkern (2) und der Deckbeschichtung (4) ein mittels Galvanisieren und/oder Bedampfen aufbringbare, sandbestrahlbare Panzerbeschichtung (3) angeordnet ist.

7. Bauteil nach Anspruch 6, **dadurch gekennzeichnet, dass** die Panzerbeschichtung (3) eine harte Panzerschicht (6) zum Schutz des Bauteilkerns (2) vor mechanischen Belastungen beim Sandstrahlen und eine an die Deckbeschichtung (4) angrenzende, sandbestrahlbaren Schicht (7) aufweist.

8. Bauteil nach Anspruch 7, **dadurch gekennzeichnet, dass** zwischen der Panzerschicht (6) und dem Bauteilkern (2) eine Unterschicht (5) als eine weitere Schicht der Panzerbeschichtung (3) angeordnet ist, wobei die Unterschicht (5) mittels Galvanisieren und/oder Bedampfen auf den Bauteilkern (2) aufbringbar ist.

9. Bauteil nach einem der Ansprüche 7 und 8, **dadurch gekennzeichnet, dass** die Deckbeschichtung (4) eine äußere Schicht (8) und/oder wenigstens eine zwischen der Panzerbeschichtung (3) und der äußeren Schicht (8) angeordnete zwischenschicht (10, 11) aufweist.

10. Bauteil nach einem der Ansprüche 7 bis 9, **dadurch gekennzeichnet, dass** die Panzerschicht (6) eine größere Härte aufweist als die sandbestrahlbare Schicht (7) und/oder die Unterschicht (5) und/oder das Basismaterial.

11. Bauteil nach einem der Ansprüche 7 bis 10, **dadurch gekennzeichnet, dass** die Panzerschicht (6) als eine Nickelschicht und/oder eine Kobaltschicht und/oder als eine Schicht aus einer Nickel-Eisen-Legierung ausgebildet ist.

12. Bauteil nach einem der Ansprüche 7 bis 11, **dadurch gekennzeichnet, dass** die sandbestrahlbare Schicht (7) und/oder eine Unterschicht (5) und/oder wenigstens eine Zwischenschicht (10, 11) der Deckbeschichtung (4) als eine Kupferschicht ausgebildet rind.

13. Bauteil nach Anspruch 9, **dadurch gekennzeichnet, dass** die äußere Schicht (8) als eine Chromschicht ausgebildet ist.

14. Bauteil nach Anspruch 9, **dadurch gekennzeichnet, dass** die Deckbeschichtung (4) die äußere Schicht (8) und zwei Zwischenschichten (10, 11) aufweist, wobei eine der Panzerbeschichtung (3) zugewandte erste Zwischenschicht (10) als eine Kupferschicht und eine zwischen der ersten Zwischenschicht (10) und der äußeren Schicht (9) angeordnete zweite Zwischenschicht (11) als eine Nickelschicht ausgebildet ist.

## Claims

1. Process for manufacturing a component (1) with a component core (2) made of a base material wherein the component core (2) is provided by pressure die casting an aluminum die cast body consisting of aluminum or an aluminum alloy as base material and/or a zinc die cast body consisting of zinc or a zinc alloy as base material and/or a magnesium die cast body consisting of magnesium or a magnesium alloy as base material, or by injection molding a plastic body consisting of plastic as base material, wherein a semi-finished product (12) including said component core (2) is sandblasted and thereafter provided with a top coating (4) and wherein to form said semi-finished product an armor topping (3) is applied to the component core (2) prior to sandblasting, **characterized in that** to form said armor topping (3) a rigid armor plating (6) is initially applied by way of electroplating and/or vaporizing to protect the component core (2) against mechanical strains during the sandblasting process and a layer (7) adapted to be sandblasted is then deposited to said armor plating (6), and that a chromium coating is finally applied as an outer layer (8) of the top coating (4) by electroplating.

2. Process according to Claim 1, **characterized in that** prior to applying the outer layer (8) at least one further layer (10, 11) of the top coating (4) is applied to the armor topping (3) to form at least one intermediate layer between said armor topping (3) and said outer layer (8).

3. Process according to Claim 2, **characterized in that** the intermediate layer (10, 11) is a copper layer and/or a nickel layer formed by electroplating and/or vaporizing.

4. Process according to any of the Claims 1 to 3, **characterized in that** prior to applying the armor plating (6) a substrate (5) is applied to the component core (2) as a further layer of the armor topping (3).

5. Process according to Claim 4, **characterized in that** to form the substrate (5) between the component core (2) and the armor plating (6) a copper layer (2) is applied to the component core by electroplating and/or vaporizing.

6. Component (1) with a component core (2) made of a base material and a top coating (4) applied by electroplating to form a matt chromium plated surface (9) wherein the component core (2) is provided by pressure die casting an aluminum die cast body consisting of aluminum or an aluminum alloy as base material and/or a zinc die cast body consisting of zinc or a zinc alloy as base material and/or a magnesium die cast body consisting of magnesium or a magnesium alloy as base material, or by injection molding a plastic body consisting of plastic as base material, **characterized in that** an armor topping (3) adapted to be sandblasted is provided between the component core (2) and the top coating (4) by electroplating or vaporizing.

7. Component according to Claim 6, **characterized in that** the armor topping (3) comprises a rigid armor plating (6) to protect the component core (2) against mechanical strains and a layer (7) adjacent to the top coating (4) that is adapted for sandblasting.

8. Component according to Claim 7, **characterized in that** a substrate (5) is provided as another layer of the armor topping (3) which substrate (5) is applied to the component core (2) by electroplating and/or vaporizing.

9. Component according to any of the Claims 7 and (8), **characterized in that** the top coating (4) comprises an outer layer (8) or at least one intermediate layer (10, 11) disposed between the armor plate (3) and the outer layer (10, 11).

10. Component according to any of the Claims 7 to 9, **characterized in that** the armor plating (6) is of greater rigidity than the layer (7) adapted for sandblasting and/or the substrate (5) and/or the base material.

11. Component according to any of the preceding Claims 7 to 10, **characterized in that** the armor plating (6) is a nickel layer and/or a cobalt layer and/or a layer consisting of a nickel-iron alloy.

12. Component according to any of the preceding claims 7 to 11, **characterized in that** the layer (7) adapted for sandblasting and/or the substrate (5) and/or at least one of the intermediate layers (10, 11) of the top coating (4) consists of copper.

13. Component according to Claim 9, **characterized in that** the outer layer (8) is a chromium layer.

14. Component according to Claim 9, **characterized in that** the top coating (4) comprises the outer layer (8) and two intermediate layers (10, 11) wherein a first intermediate layer (10) that is facing the armor topping (3) is a copper layer and the second intermediate layer (11) disposed between said first intermediate layer (10) and the outer layer (9) is a nickel layer.

## Revendications

1. Procédé pour la fabrication d'un composant (1), doté d'un noyau (2), à partir d'un matériau de base,
- sachant que le noyau (2) est fabriqué par moulage sous pression, en tant que corps coulé sous pression à base d'aluminium, à partir d'aluminium ou d'un alliage d'aluminium comme matériau de base et / ou en tant que corps coulé sous pression à base de zinc, à partir de zinc ou d'un alliage de zinc comme matériau de base, et / ou en tant que corps coulé sous pression à base de magnésium, à partir de magnésium et ou d'un alliage de magnésium comme matériau de base ou moulé par injection en tant que corps en matière synthétique, et
- sachant qu'un semi-produit (12), qui contient le noyau (2) du composant, est sablé et pourvu ensuite d'un revêtement de couverture (4),
- sachant que, pour la réalisation du semi-produit (12), un revêtement de protection (3) est appliqué sur le noyau (2) avant le sablage,
**caractérisé en ce que**, pour la réalisation dudit revêtement de protection (3), on applique, tout d'abord, par galvanisation et / ou par métallisation sous vide, une couche protectrice dure (6) pour protéger le noyau (2) contre les sollicitations mécaniques lors du sablage, et applique ensuite, par galvanisation, sur la couche protectrice dure (6), une couche (7) qui peut être sablée, et **en ce qu'**une couche de chrome est appliquée, par galvanisation, en tant que couche extérieure (8) du revêtement de couverture (4).

2. Procédé selon la revendication 1, **caractérisé en ce que**, avant l'application de la couche extérieure (8), au moins une autre couche (10, 11) du revêtement de couverture (4) est appliquée sur le revêtement de protection (3) pour former au moins une couche intermédiaire (10, 11), qui est disposée entre le revêtement de protection (3) et la couche extérieure (8).

3. Procédé selon la revendication 2, **caractérisé en ce que**, comme couche intermédiaire (10, 11), on applique, par galvanisation et / ou par métallisation sous vide, une couche de cuivre et / ou une couche de nickel.

4. Procédé selon l'une des revendications 1 à 3, **caractérisé en ce que**, avant l'application de la couche protectrice (6), on applique, sur le noyau (2) du composant, une couche inférieure (5), en tant qu' autre couche du revêtement de protection (3).

5. Procédé selon la revendication 4, **caractérisé en ce que**, pour la formation de la couche inférieure (5), entre le noyau (2) du composant et la couche protectrice (6), on applique, par galvanisation et / ou par métallisation sous vide, une couche de cuivre (2) sur le noyau du composant.

6. Composant (1) avec un noyau (2), réalisé à partir d'un matériau de base, et avec un revêtement de couverture (4), qui peut être appliquée par galvanisation pour la formation d'une surface chromée mate (9), sachant que le noyau (2) du composant peut être fabriqué par moulage sous pression, en tant que corps coulé sous pression à base d'aluminium, à partir d'aluminium ou d'un alliage d'aluminium comme matériau de base et / ou en tant que corps coulé sous pression à base de zinc, à partir de zinc ou d'un alliage de zinc comme matériau de base, et / ou en tant que corps coulé sous pression à base de magnésium, à partir de magnésium et ou d'un alliage de magnésium comme matériau de base ou moulé par injection en tant que corps en matière synthétique, **caractérisé en ce que**, entre le noyau (2) du composant et le revêtement de couverture (4), est disposé un revêtement de protection (3), qui peut être appliqué par galvanisation et /ou par métallisation sous vide et peut être sablé.

7. Composant selon la revendication 6, **caractérisé en ce que** le revêtement de protection (3) est doté d'une couche protectrice dure (6), qui est destinée à protéger le noyau (2) du composant contre les sollicitations mécaniques lors du sablage, et d'une couche (7), qui, pouvant être sablée, est contigüe au revêtement de couverture (4).

8. Composant selon la revendication 7, **caractérisé en ce que**, entre la couche protectrice (6) et le noyau (2) du composant, est disposée une couche inférieure (5), en tant qu'autre couche du revêtement de protection (3), sachant que ladite couche inférieure (5) peut être appliquée, par galvanisation et / ou par métallisation sous vide, sur le noyau (2) du composant.

9. Composant selon l'une des revendications 7 et 8, **caractérisé en ce que** le revêtement de couverture (4) est doté d'une couche extérieure (8) et / ou d'au moins une couche intermédiaire (10, 11), qui est disposée entre le revêtement de protection (3) et la couche extérieure (8).

10. Composant selon l'une des revendications 7 à 9, **caractérisé en ce que** la couche protectrice (6) présente une dureté plus élevée que la couche (7) pouvant être sablée et /ou que la couche inférieure (5) et / ou que le matériau de base.

11. Composant selon l'une des revendications 7 à 10, **caractérisé en ce que** la couche protectrice (6) consiste en une couche de nickel et / ou une couche de cobalt et / ou une couche d'alliage nickel-fer.

12. Composant selon l'une des revendications 7 à 11, **caractérisé en ce que** la couche sablée (7) et / ou une couche inférieure (5) et / ou au moins une couche intermédiaire (10, 11) du revêtement de couverture (4) est / sont réalisée/s sous la forme d'une couche de cuivre.

13. Composant selon la revendication 9, **caractérisé en ce que** la couche extérieure (8) est réalisée sous la forme d'une couche de chrome.

14. Composant selon la revendication 9, **caractérisé en ce que** le revêtement de couverture (4), comprend une couche extérieure (8) et les deux couches intermédiaires (10, 11), sachant qu'une première couche intermédiaire (10), orientée vers le revêtement de protection (3), est réalisée sous la forme d'une couche de cuivre, qu'une deuxième couche intermédiaire (11), disposée entre la première couche intermédiaire (10) et la couche extérieure (8) est réalisée sous la forme d'une couche de nickel.
